# EUROPEAN PATENT APPLICATION

(11) **EP 1 643 740 A1**
(43) Date of publication of application: **05.04.2006**
(21) Application number: 05255868.1
(22) Date of filing: 22.09.2005
(51) Int. Cl.: H04M 3/42, H04M 7/00, H04L 12/66

(54) **System and method for enabling callback for VoIP emergency calls**

(30) Priority: 29.09.2004 US 952980
(71) Applicant: LUCENT TECHNOLOGIES INC., Murray Hill, New Jersey 07974-0636 (US)
(72) Inventor: Florkey, Cynthia, Chicago, Il 60605 (US); Gayde, Ruth Schaefer, Naperville, IL 60565 (US); Halsell, Victoria Marie, Bolingbrook, IL 60490 (US); Hunter, Karla Rae, Naperville, IL 60564 (US); Lou, E-ling, Naperville, IL 60540 (US)
(74) Representative: Sarup, David Alexander

(57) **Abstract**

Systems and methods are disclosed for serving VoIP emergency calls. In one embodiment, a call control entity (104) is placed between PSAPs (106,124) of an emergency services network and the IP network (112) transporting VoIP calls. When the call control entity (104) receives a VoIP emergency call and its associated user ID, the call control entity assigns a TDN to the emergency call and associates the assigned TDN to the user ID. The emergency call and the TDN are then extended to a PSAP (106,124) to handle the emergency call. If the emergency call is disconnected from the PSAP, the PSAP operator is able to dial the TDN to provide a call-back function. The call control entity receives the call-back attempt to the TDN from the PSAP, identifies the user ID associated with the TDN, and routes the call-back attempt to the user ID to reestablish a call between the PSAP and the user.

## Description

### Background of the Invention

### 1. Field of the Invention

The invention relates to emergency call communications, and in particular, to systems and methods for providing emergency call service for Voice over Internet Protocol (VoIP) calls. This invention further relates to systems and methods for providing call back for VoIP emergency calls.

### 2. Statement of the Problem

When a caller dials an emergency number, such as 911 in the U.S., 112 in Europe, etc, the emergency call is routed to a Public Safety Answering Point (PSAP) to handle the call. The PSAP acquires information on the emergency call, such as the directory number (DN) of the telephone used by the caller, the location of the caller, and other information. For an emergency call placed over a circuit-based network, such as a Public Switched Telephone Network (PSTN), the PSAP receives the directory number of the calling telephone over the signaling used to set up the emergency call. If the emergency call is dropped for some reason, the PSAP operator is able to perform a call-back function by calling the directory number.

Some service providers are now offering Voice over Internet Protocol (VoIP) service that routes voice traffic over the Internet in IP packets. One problem for VoIP service providers is providing emergency services for VoIP emergency calls. VoIP phones have a phone number that is designated by the service provider. The VoIP phones are also identified by a user identifier (ID), such as a Session Initiation Protocol (SIP) Uniform Resource Identifier (URI), a Uniform Resource Locator (URL), an IP address, or some other identifier. This user ID is used to route packets to the VoIP phone.

Currently, when an emergency call is placed from a VoIP phone, the emergency call is routed to a traditional PSAP. However, the phone number of the VoIP phone is not provided to the PSAP as is done in a circuit-based network. Also, traditional PSAPs cannot effectively determine the phone number of the VoIP phone. The PSAP may be able to handle the emergency call from the VoIP phone as long as the emergency call remains active. However, a problem remains if the emergency call becomes disconnected as the PSAP does not have a phone number to perform a call-back function to the VoIP phone. Call back for VoIP emergency calls is desired so that VolP callers may receive quality emergency call service comparable to that provided for emergency calls placed over a circuit-based network.

### Summary of the Solution

The present invention solves the above described and other problems by the provision of systems and methods that assign temporary directory numbers (TDN) to VoIP emergency calls. In one embodiment of the system, a call control entity is placed between PSAPs of an emergency service network and the IP network transporting VoIP calls. When a VoIP emergency call is placed from a VoIP calling station (e.g., a VoIP phone), the emergency call is routed to the call control entity. The emergency call includes a user ID, such as a SIP URI, a URL, an IP address, etc, that identifies the VoIP calling station on the IP network. The call control entity assigns a TDN to the emergency call and associates the assigned TDN to the user ID, such as by storing the TDN and the user ID in a database or memory. The emergency call and the TDN are then extended to a PSAP to handle the emergency call.

If the emergency call is disconnected from the PSAP, the PSAP operator is able to dial the TDN to provide a call-back function. The network between the PSAP and the call control entity routes the call-back attempt from the PSAP to the call control entity. The call control entity receives the call-back attempt to the TDN from the PSAP, and identifies the user ID associated with the TDN. The call control entity then routes the call-back attempt from the PSAP to the VoIP calling station that initiated the emergency call using the user ID to reestablish the call.

The call control entity advantageously interfaces an IP network with traditional PSAPs so that the traditional PSAPs can provide call-back functions for VoIP emergency calls. By assigning TDN's to VoIP emergency calls, the call control entity is able to provide the PSAP with a telephone number as expected by the PSAP. The PSAP may be unaware that the emergency call originated from a VolP station, as the PSAP receives a DN just as with a circuit-based network. The TDN advantageously allows the PSAP to reestablish a disconnected call in the same manner as for traditional circuit-based emergency calls.

### ASPECTS

An aspect of the invention comprises a system for serving VolP emergency calls, said system comprising:
apparatus operable for receiving a VoIP emergency call accompanied by a user identifier (ID) identifying the user of said user ID;
said apparatus being operable for assigning a temporary directory number (TDN) to said user ID;
a first memory for storing said user ID and said assigned TDN;
said apparatus being operable to extend said VoIP emergency call and said assigned TDN to an emergency services center; and
said apparatus is operable for reestablishing said VoIP emergency call if dropped by using said assigned TDN and said user ID to establish a call between said emergency services center and said user identified by said user ID.

Preferably said system includes:
a second memory for storing said user ID together with location information for said user ID;
said user ID comprises one of a Session Initiation Protocol (SIP) Uniform Resource identifier (URI), a Uniform Resource Locator (URL), or an Internet Protocol (IP) address; and
said emergency services center includes a Public Safety Answering Point (PSAP).

Preferably said system further includes:
apparatus that transmits said assigned TDN and said location information to a location translation facility;
if said location information comprises longitude and latitude information, then said location translation facility correlates said longitude and latitude information to address information, and selects said emergency services center based on said address information; and
if said location information comprises address information, then said location translation facility selects said emergency services center based on said address information.

Preferably said system further includes:
apparatus that receives a call-back attempt to said assigned TDN from said emergency services center, processes said call-back attempt to identify said user ID associated with said assigned TDN, and routes said call-back attempt to said user ID to establish said call between said emergency services center and said user identified by said user ID.

Preferably said system further includes:
apparatus that disassociates said assigned TDN from the user ID responsive to said call being completed, and returns said assigned TDN to a pool of available TDNs.

Another aspect of the invention comprises a method of operating a system for serving VolP emergency calls, said method comprising the steps of:
receiving a VolP emergency call accompanied by a user identifier (ID) identifying the user of said user ID;
assigning a temporary directory number (TDN) to said user ID;
storing said user ID and said assigned TDN;
extending said VolP emergency call and said assigned TDN to an emergency services center;
receiving a call-back attempt including said assigned TDN from said emergency services center in response to a dropping of said VoIP emergency call; and
establishing a call between said emergency services center and said user identified by said user ID by using said assigned TDN and said user ID.

Preferably said step of storing includes the step of storing said user ID and said assigned TDN in a first memory;
said step of establishing includes the steps of accessing said first memory with said assigned TDN, and reading said user ID from the said first memory to establish said call between said emergency services center and said user represented by said user ID;
said step of storing includes the further step of storing said user ID in a second memory operable to receive location information for said user identified by said user ID;
said location information is previously recorded in said second memory for user IDs representing fixed calling locations; and
said location information specifies address information for said user ID.

Preferably said method further includes the steps of:
accessing said second memory with said assigned TDN;
reading out said location information pertaining to said VolP emergency call from said second memory;
transmitting said location information to said location translation facility to select said emergency services center based on said location information; and
said location information transmitted to said location translation facility includes one of address information or longitude and latitude information.

Preferably said method further includes the steps of:
disassociating said assigned TDN from the user ID responsive to said call being completed, and returning said assigned TDN to a pool of available TDNs; and
said user ID comprises one of a Session Initiation Protocol (SIP) Uniform Resource Identifier (URI), a Uniform Resource Locator (URL), or an Internet Protocol (IP) address.

Another aspect of the invention comprises a system for serving VoIP emergency calls originated by calling stations identified by a user identifier (ID), said method comprising the steps of:
operating a call control entity (CCE) to receive a VoIP emergency call accompanied by a user ID representing a user for said user ID;
assigning a temporary directory number (TDN) to said user ID;
storing said assigned TDN and said user ID in a first memory;
extending said VoIP emergency call and said assigned TDN to an emergency services center; and
operating said call control entity upon receipt of a call-back attempt including said assigned TDN from said emergency services center for establishing a call between said emergency services center and said user identified by said user ID by using said assigned TDN and said user ID;
said step of operating said call control entity includes:
receiving said call-back attempt to said TDN from said emergency services center;
processing said call-back attempt to identify said user ID associated with said TDN; and
routing said call-back attempt to said user ID.

### Description of the Drawings

The above and other problems solved by the present invention may be better understood from a reading of the following detailed description thereof taken in conjunction with the drawings in which:
FIG. 1 discloses a system embodying the invention.
FIG. 2 discloses further details of a system embodying the invention.
FIG. 3 discloses further details of the system of FIG. 1.

### Detailed Description of the Invention

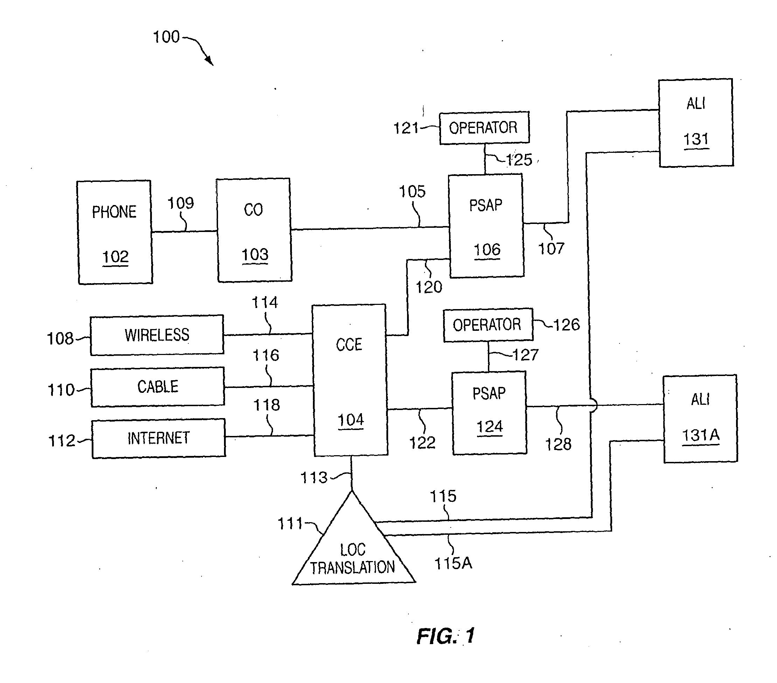

FIGS. 1-3 and the following description depict specific exemplary embodiments of the invention to teach those skilled in the art how to make and use the best mode of the invention. For the purpose of teaching inventive principles, some conventional aspects of the invention have been simplified or omitted. Those skilled in the art will appreciate variations from these embodiments that fall within the scope of the invention. Those skilled in the art will appreciate that the features described below can be combined in various ways to form multiple variations of the invention. As a result, the invention is not limited to the specific embodiments described below, but only by the claims and their equivalents.

### Description of FIG. 1

FIG. 1 discloses a system 100 that provides service for VoIP emergency calls. The serving of an emergency call requires an emergency operator to receive information identifying the calling party, to converse with the calling party to determine the nature of the emergency, and communicate with appropriate agency such as police, an ambulance, or fire department to obtain the service required by the caller. The operator must also be able to reestablish a call to the calling party in the event the call is prematurely dropped. If an emergency call is originated by a conventional telephone, such as telephone 102, the connection can be reestablished by dialing the DN of telephone 102. If an emergency call is originated by a VolP calling station, the call may be reestablished in accordance with the present invention by using a TDN temporarily assigned to the emergency call and using it in a manner analogous that of a DN for a landline call.

An emergency call initiated by landline telephone 102 is served by extending the call connection over path 109, through central office 103, and over path 105 to PSAP 106, which further extends the call over path 125 to operator 121. The call setup information received by PSAP 106 includes the DN of telephone 102. Operator 121 serves the call by conversing with the calling party to determine the nature of the emergency and to take the steps necessary to assist in the provision of the required emergency services. These services may include contacting police, fire, ambulances, etc. In providing these services, PSAP 106 communicates over path 107 with Automatic Location Information (ALI) database 131, which stores location information pertaining to the calling party. If the call connection is inadvertently disconnected, the operator may attempt to reestablish the connection by dialing the DN of telephone 102.

Wireless facility 108, cable facility 110 and Internet facility 112 represent communication facilities that can provide for placing VoIP emergency calls through a VolP calling station (not shown). Emergency calls served by facilities 108, 110 and 112 are extended over paths 114, 116 and 118, respectively, to call control entity (CCE) 104 using VolP technology. CCE 104 receives an emergency call from a VoIP calling station connected to one of the facilities 108, 110 or 112. The emergency call includes a user ID, such as a SIP URI, a URL, an IP address, etc, that identifies the VoIP calling station. CCE 104 assigns a TDN to the emergency call upon its receipt. CCE 104 also associates the assigned TDN to the user ID, such as by storing the TDN and the user ID in a database or a memory. CCE 104 then extends the emergency call and the TDN to the correct to PSAP 106 or 124 (assume PSAP 106). Although the term PSAP is used, CCE 104 may extend the emergency call to any emergency services center.

The PSAP operator 121 serves the emergency call by conversing with the calling party to determine the emergency services required, and to notify the proper authorities. The PSAP operator 121 may use the TDN received from CCE 104 to determine location information for the VoIP calling station. PSAP 106 may use the location information to dispatch the proper authorities, e.g. police, fire, ambulances, etc.

In the event the emergency call is dropped, PSAP 106 may reestablish a call with the VoIP calling station by dialing the TDN provided by CCE 104. A network (not shown) between PSAP 106 and CCE 104 knows to route the call-back attempt to CCE 104 based on the dialed TDN. CCE 104 receives the call-back attempt that includes the TDN, and associates the TDN to the user ID of the VoIP calling station that initiated the emergency call. CCE 104 then routes the call-back attempt to the VoIP calling station based on the user ID to thereby establish a call between the calling party, identified by the user ID, and PSAP 106. The term call-back attempt is used to refer to the call placed by PSAP 106 to reestablish communication with the VolP calling station.

PSAP 106, as a traditional PSAP, expects to receive a circuit-based call. For a VoIP emergency call placed from a VoIP call station, the VolP emergency call needs to be converted from packet format to a circuit-based format, such as Time Division Multiplexing (TDM) format. CCE 104 may performs the conversion upon receiving the VolP emergency call, or an intervening gateway may perform the conversion. In different embodiments of CCE 104, CCE 104 is configured to handle packet-based calls, circuit-based calls, or both.

CCE 104 is further connected to location translation (LT) facility 111 which assists CCE 104 in routing each emergency call to the correct PSAP 106 or 104. Location translation facility 111 also assists in updating the location information corresponding with the TDN stored in ALI database 131 and 131A. ALI database 131 and 131 A maintains location information of DNs used by PSAP 106 or 124 in the serving of emergency calls.

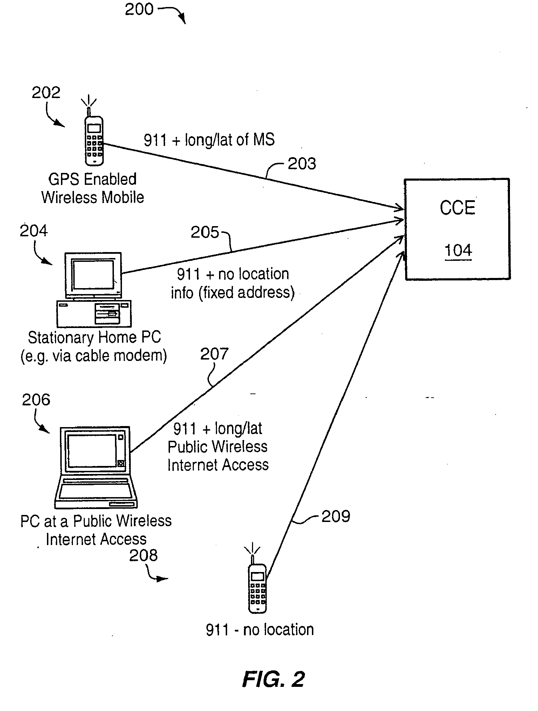

### Description of FIG. 2

FIG. 2 discloses a system 200 that enables VoIP calling stations to be assigned a temporary directory number (TDN) which would be provided to PSAPs. FIG. 2 discloses different VoIP calling stations, such as GPS enabled cell phone 202 having Internet access. FIG. 2 further discloses stationary home PC 204 equipped with a VoIP telephone and served by a cable modem having Internet access. FIG. 2 further discloses VolP telephone equipped PC 206 located at a public wireless Internet access point having Internet access. FIG. 2 still further discloses conventional non-GPS enabled wireless mobile telephone 208 having Internet access. Paths 203, 205, 207, and 209 to CCE 104 connect these phones and PCs, respectively. The various phones and PCs of FIG. 2 may access VoIP services via facilities provided by different service providers such as traditional land line facilities, cable facilities, wireless facilities, etc. CCE 104 may be owned by a VoIP service provider.

As previously described, existing emergency services centers, such as PSAPs, are equipped to received directory numbers (DN) to provide call-back functions, but are not equipped to receive user IDs for VoIP calling stations. In other words, existing emergency call service facilities are not equipped to use a user ID from a VoIP calling station to reestablish a dropped call. The system of the present invention serves a VoIP emergency call by assigning a temporary directory number (TDN) to the call. The assigned TDN and the user ID of the VoIP calling station, which is derivable at the CCE, are used to reestablish a dropped call.

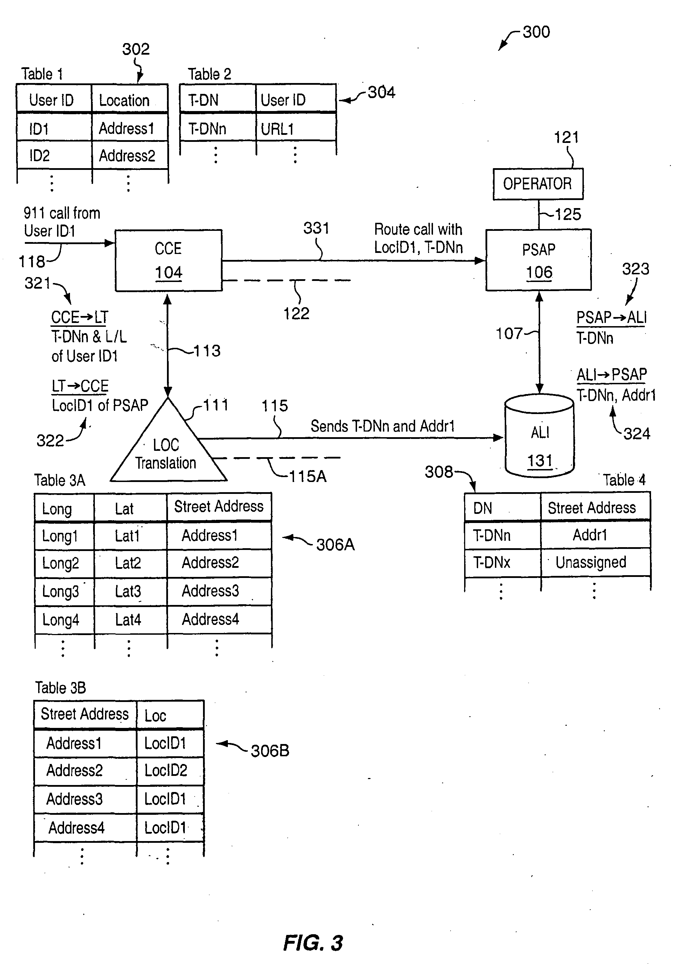

A VoIP emergency call originated by GPS enabled cell phone 202 is extended over path 203 to CCE 104. The user ID (e.g., SIP URI) for this device has been previously registered in a database of CCE 104 when the VoIP service is invoked so the user ID for this device is known to CCE 104. The call setup information received by CCE 104 for this call includes latitude and longitude information provided by the GPS facilities of cell phone 202. This information will be used during establishment of the emergency call, and which will be further explained with FIG. 3.

A VoIP emergency call originated by stationary home PC 204 equipped with a VoIP telephone is extended over path 205 to CCE 104 by a cable modem. Cable path 205 provides VoIP access between PC 204 and CCE 104 to enable the PC user to place the VoIP emergency calls. The user ID (e.g., SIP URI) for this device has been previously registered in a database of CCE 104 when the VoIP service is invoked so the user ID for device is known to CCE 104. The VoIP service provider for PC 204 registers the street address of PC 204 at CCE 104 as part of the service provisioning process. This information will be used during establishment of the emergency call, and which will be further explained with FIG. 3.

A VolP emergency call originated by a PC at a public wireless internet access point 206 is served in much the same manner as described for a VolP emergency call from stationary PC 204. When the user invokes the VolP service, the user will be prompted to enter the user's current location by typing in the address, by selecting the location from a list of frequently visited locations, or by selecting from a list of locations provided by the VoIP service provider. This information will be used during establishment of the emergency call, and which will be further explained with FIG. 3.

A VoIP emergency call originated by cell phone 208 is extended over path 209 to CCE 104. The user ID (e.g., SIP URI) for this device has been previously registered in a database of CCE 104 when the VoIP service is invoked so the user ID for this device is known to CCE 104. When the user invokes the VoIP service, the user will be prompted to enter the user's location by selecting from a list of frequently visited locations, or by selecting from a list of locations provided by the VoIP service provider. The VoIP emergency call setup information from the cell phone 208 does not include longitude and latitude information since cell phone 208 is not GPS enabled. This information will be used during establishment of the emergency call, and which will be further explained with FIG. 3.

### Description of FIG. 3

FIG. 3 discloses a system 300 which serves a VolP emergency call by allocating a TDN to the emergency call. The system of FIG. 3 associates a newly assigned TDN to the caller's user ID and further stores the associated information for use in reestablishing a dropped call.

Shown on FIG. 3 are CCE 104, PSAP 106, operator 121, ALI database 131 and location translation facility 111. Element CCE 104 is also shown on FIGS. 1 and 2. To minimize drawing complexity, FIG. 3 discloses only a single PSAP 106, a single operator 121 and a single ALI database 131. It is to be understood that CCE 104 of FIG. 3 may function in a similar manner as CCE 104 of FIGS. 1 and 2. It can direct calls to a plurality of PSAPs. A second PSAP 124 is shown on FIG. 1 but not on FIG. 3 and is connected to CCE 104 of FIG. 3 by path 122 on FIG. 1. Also, location translation facility 111 should be understood as being connected to the ALI database 131 by path 150 in as well as to ALI database 131A of FIG. 1 by path 115A.

Tables 302 and 304 on FIG. 3 are associated with CCE 104. These tables store data and information used by CCE 104. Tables 306A and 306B are associated with location translation facility 111 to store the data and information used during the serving of an emergency call. Table 308 stores the data used by the ALI database 131. Messages 321, 322, 323 and 324 designate messages specifying the information transmitted between elements of system 300 during the serving of emergency calls.

Tables 302 and 304 store information used by CCE 104 during the serving of an emergency call. The left-hand column of table 302 stores user IDs, such as a SIP URIs, URLs, IP addresses, or any other identifiers that identify the VoIP calling stations on an IP network. The right-hand column of table 302 stores location information for the VoIP calling stations. This location information may be street address information or longitude/latitude information. The entries are updated at different times depending upon the type of user service agreement.

For a user with a service agreement to receive VolP service from a fixed location (stationary home PC, VolP telephone at home), the entry in table 302 for this user is populated at the time the user signs the service agreement with the VoIP service provider. For example, for a user using a VolP phone from home, the right-hand column of table 302 for this user entry is populated with the user's home address at the time the user signs the service agreement.

For a user with a service agreement to receive VoIP service from any location with IP connectivity such as wireless facility 108, cable facility 110, or Internet facility 112, as shown in FIG. 1, when using a device without GPS capability, the entry in table 302 for this user is updated at the time the user invokes the VoIP service. For a user using a PC without GPS capability, when the user invokes VolP service, the user will be prompted to enter the user's current location by typing in the address, by selecting the location from a list of user frequently visited locations, or by selecting a list of locations provided by the VoIP provider. The location information entered by the user will be stored in the right-hand column of table 302 for this user. This procedure may be optimized by prompting the user to enter her current location only if the user's IP address changed.

For a user with a service agreement to receive VoIP service from any location with IP connectivity using a GPS enabled device, the table 302 entry for this user will be obtained at the time the user place an emergency call. For example, when using a GPS enabled mobile device and when the user places an emergency call, the user location in the form of longitude and latitude information is sent to CCE 104.

Table 304 dynamically stores the list of TDNs that are currently being assigned to emergency calls in its left-hand column and the user IDs in its right-hand column. Upon receiving a VoIP emergency call, CCE 104 retrieves a TDN from a pool of available TDNs and assigns the TDN to the VoIP emergency call by writing the assigned TDN in the left-hand column of table 304. CCE 104 associates the TDN to the user ID of the VolP calling station of the emergency call by entering the user ID (e.g., URL1) into the right-hand column of table 304. CCE 104 removes the TDN entries in table 304 and returns the TDNs to the pool of available TDNs when their associated call ends successfully (i.e., when the PSAP operator has-completed serving the caller).

If CCE 104 receives a VolP emergency call from a calling station that provides longitude and latitude information, CCE 104 uses the longitude and latitude information as the location information as shown in the text associated with message 321 for transmission to location translation facility 111. In another embodiment, if CCE 104 receives a VolP emergency call from a calling station that does not provide longitude and latitude information, CCE 104 retrieves the location information from table 302 and uses this location information in the text associated with message 321 (refer to FIG. 3 for non-GPS device). The text associated with message 321 indicates that CCE 104 now transmits to location translation facility 111 the TDN assigned to the call as well as the location information identifying the location of the calling station.

Location translation facility 111 selects a PSAP 106 to handle the emergency call. Table 306A provides longitude/latitude and street address mapping. This information is similar to the information used by a car navigation system, or map request service providers. If location translation facility 111 receives longitude and latitude information from CCE 104 for a VolP calling station, then location translation facility 111 enters the longitude and latitude information into table 306A to retrieve address information for the calling station.

Table 306B stores the street address and PSAP mapping. Table 306B is used to determine the PSAP serving the location for the calling station. The left-hand column of table 306B may contain complete street addresses or portions of the street address, e.g. zip code or postal zone, depending on the zoning assigned to the PSAP. The right-hand column of table 306B identifies each PSAP by the designations to LocID1 or LocID2 corresponding to PSAPs 106 and 131.

Location translation facility 111 is connected by path 115 to ALI database 131 and by path 115A to ALI database 131A as shown on FIG. 1 but not on FIG. 3. If location translation facility 111 receives the message 321 with the longitude and latitude information from the CCE 104, then location translation facility 111 uses table 306A to derive the street address to access table 306B. Location translation facility 111 then uses the derived street address to identify the PSAP to handle the emergency call. Alternatively, if the message 321 from the CCE 104 contains the street address, then location translation facility 111 directly accesses table 306B using the received street address to identify the PSAP to handle the emergency call. The designation of LocID1 in the right-hand column of table 306B instructs the location translation facility 111 to transmit information over path 115 to ALI database 131 associated with PSAP 106. This information is stored in table 308 and includes the TDN assigned to the call and the street address of the calling station. Also, as shown by message 322, location translation facility 111 now transmits back to CCE 104 the instruction specifying the PSAP 106 selected to serve the emergency call. CCE 104 receives this information from location translation facility 111 and transmits call setup information over path 331 to PSAP 106 to enable operator 121 to serve the VolP emergency call. The call setup information transmitted over path 331 to PSAP 106 includes the PSAP designation and the TDN assigned to the call. ALI database 131 is currently storing the assigned TDN for the VolP emergency call in the left column of table 308 and the address of the calling station in the right-hand column of table 308. As shown for message 323, PSAP 106 queries the ALI database 131 using the calling TDN over path 107. As shown for message 324, the ALI database 131 responds with the street address for the TDN over path 107 to PSAP 106.

Each PSAP may serve a different geographical area and may be owned by different municipalities. The PSAP is able to query an ALI database which stores the address information for a pre-determined set of calling DNs. It is important that each call be directed to the PSAP whose ALI database stores the address information required to serve each received call. To enable the proper directing of emergency calls to the right PSAP, table 306B is used.

PSAP 106 now contains all the information required to extend the call to operator 121. PSAP 106 has received the TDN for the call from CCE 104 via path 331 and further receives the street address associated with the TDN for the call from ALI database 131 over path 107. The operator serves the call using this information and initiates the dispatch of the required emergency services to the calling station.

If the emergency call to PSAP 106 becomes disconnected, operator 121 uses the TDN to reestablish the dropped call by performing a call-back function. PSAP 106 dials the TDN. The network (not shown) between PSAP 106 and CCE 104 knows to route the call-back attempt to CCE 104 based on the TDN. CCE 104 receives the call-back attempt from PSAP 106, where the call-back attempt includes the TDN. CCE 104 associates the TDN to the user ID of the VoIP calling station that initiated the emergency call. CCE 104 then routes the call-back attempt to the VolP calling station based on the user ID to thereby establish a call between the calling party, identified by the user ID, and PSAP 106.

The above description discloses possible exemplary embodiments of this invention. It is expected that those skilled in the art can and will design alternative embodiments that infringe on this invention as set forth in the claims below literally or through the Doctrine of Equivalents. CCE element 104 may comprise a processor controlled device that controls the exchange of information between paths 118, 331, 122, 113 and tables 302 and 304. Tables 302 and 304 may be memories that are internal or external to CCE 104. Location translation facility 111 may be a processor controlled device that controls the exchange of information between paths 113, 115, 115A and tables 306A and 306B. Tables 306A and 306B may be internal or external to location translation facility 111.

## Claims

1. A system for serving VoIP emergency calls, said system comprising:
apparatus (104) operable for receiving a VoIP emergency call accompanied by a user identifier (ID) identifying the user of said user ID;
said apparatus being operable for assigning a temporary directory number (TDN) to said user ID;
a first memory (304) for storing said user ID and said assigned TDN;
said apparatus being operable to extend said VolP emergency call and said assigned TDN to an emergency services center (106); and
said apparatus is operable for reestablishing said VolP emergency call if dropped by using said assigned TDN and said user ID to establish a call between said emergency services center 106 and said user identified by said user ID.

2. The system of claim 1 further including:
a second memory (302) for storing said user ID together with location information for said user ID;
said user ID comprises one of a Session Initiation Protocol (SIP) Uniform Resource Identifier (URI), a Uniform Resource Locator (URL), or an Internet Protocol (IP) address; and
said emergency services center 106 includes a Public Safety Answering Point (PSAP).

3. The system of claim 2 further including:
apparatus (113) that transmits said assigned TDN and said location information to a location translation facility (111);
if said location information comprises longitude and latitude information, then said location translation facility correlates said longitude and latitude information to address information, and selects said emergency services center based on said address information; and
if said location information comprises address information, then said location translation facility selects said emergency services center based on said address information.

4. The system of claim 1 further including:
apparatus (104) that receives a call-back attempt to said assigned TDN from said emergency services center, processes said call-back attempt to identify said user ID associated with said assigned TDN, and routes said call-back attempt to said user ID to establish said call between said emergency services center and said user identified by said user ID.

5. The system of claim 1 further including:
apparatus 104, (304) that disassociates said assigned TDN from the user ID responsive to said call being completed, and returns said assigned TDN to a pool of available TDNs.

6. A method of operating the system of claim 1 for serving VoIP emergency calls, said method comprising the steps of:
receiving a VoIP emergency call accompanied by a user identifier (ID) identifying the user of said user ID;
assigning a temporary directory number (TDN) to said user ID;
storing said user ID and said assigned TDN;
extending said VolP emergency call and said assigned TDN to an emergency services center;
receiving a call-back attempt including said assigned TDN from said emergency services center in response to a dropping of said VolP emergency call; and
establishing a call between said emergency services center and said user identified by said user ID by using said assigned TDN and said user ID.

7. The method of claim 6 wherein said step of storing includes the step of storing said user ID and said assigned TDN in a first memory;
said step of establishing includes the steps of accessing said first memory with said assigned TDN, and reading said user ID from the said first memory to establish said call between said emergency services center and said user represented by said user ID;
said step of storing includes the further step of storing said user ID in a second memory operable to receive location information for said user identified by said user ID;
said location information is previously recorded in said second memory for user IDs representing fixed calling locations; and
said location information specifies address information for said user ID.

8. The method of claim 7 further including the steps of:
accessing said second memory with said assigned TDN;
reading out said location information pertaining to said VolP emergency call from said second memory;
transmitting said location information to said location translation facility to select said emergency services center based on said location information; and
said location information transmitted to said location translation facility includes one of address information or longitude and latitude information.

9. The method of claim 8 further including the steps of:
disassociating said assigned TDN from the user ID responsive to said call being completed, and returning said assigned TDN to a pool of available TDNs; and
said user ID comprises one of a Session Initiation Protocol (SIP) Uniform Resource Identifier (URI), a Uniform Resource Locator (URL), or an Internet Protocol (IP) address.

10. A method of operating the system of claim 1 for serving VolP emergency calls originated by calling stations identified by a user identifier (ID), said method comprising the steps of:
operating a call control entity (CCE) to receive a VolP emergency call accompanied by a user ID representing a user for said user ID;
assigning a temporary directory number (TDN) to said user ID;
storing said assigned TDN and said user ID in a first memory;
extending said VolP emergency call and said assigned TDN to an emergency services center; and
operating said call control entity upon receipt of a call-back attempt including said assigned TDN from said emergency services center for establishing a call between said emergency services center and said user identified by said user ID by using said assigned TDN and said user ID;
said step of operating said call control entity includes:
receiving said call-back attempt to said TDN from said emergency services center;
processing said call-back attempt to identify said user ID associated with said TDN; and
routing said call-back attempt to said user ID.
